# NEUE EUROPÄISCHE PATENTSCHRIFT

(11) **EP 0 429 864 B2**
(45) Veröffentlichungstag und Bekanntmachung des Hinweises auf die Entscheidung über den Einspruch: **03.12.1997**
(45) Hinweis auf die Patenterteilung: 28.12.1994
(21) Anmeldenummer: 90120666.4
(22) Anmeldetag: 29.10.1990
(51) Int. Cl.: A01C 17/00

(54) **Zentrifugaldüngerstreuer**
Centrifugal fertilizer spreader
Epandeur d'engrais centrifuge

(30) Priorität: 24.11.1989 DE 3938921; 03.11.1989 DE 3936633
(43) Veröffentlichungstag der Anmeldung: 05.06.1991
(73) Patentinhaber: Amazonen-Werke H. Dreyer GmbH & Co. KG, D-49205 Hasbergen (DE)
(72) Erfinder: Dreyer, Heinz, Dipl.-Ing.Dr., W-4507 Hasbergen (DE)
(74) Vertreter: Schuster, Thomas, Dipl.-Phys.

(56) Entgegenhaltungen:
- EP-A- 0 017 128
- EP-A- 0 292 873
- Grundl. Landtechn. Bd. 19 (1969) Nr. 2
- Manuskript DLG-Teilprüfung von Schleuder- und Pendeldüngerstreuern, Januar 1987

## Beschreibung

Die Erfindung betrifft ein Verfahren zum Einsatz eines Zentrifugaldüngerstreuersystems und ein Zentrifugaldüngerstreuersystem zur Durchführung des Verfahrens gemäß der Oberbegriffe der Patentansprüche 1 und 2.

Ein derartiges Verfahren und ein derartiger Zentrifugaldüngerstreuer sind beispielsweise durch die europäische Patentanmeldung 02 92 873 bekannt. Bei diesem Zentrifugaldüngerstreuer sind die Schleuderscheiben mit ihren Wurfschaufeln austauschbar auf den Antriebswellen angeordnet, so daß Schleuderscheiben mit unterschiedlichen langen Wurfschaufeln einzusetzen sind, um so bei unterschiedlichen Arbeitsbreitenbereichen eine gleichmäßige Verteilung des Düngers auf dem Feld zu erreichen. Bei diesem Zentrifugaldüngerstreuer ist es jedoch erforderlich, daß für jede Arbeitsbreite und bei Wechsel der Düngersorte, selbst bei der gleichen Arbeitsbreite die Wurfschaufeln in einem anderen Winkel eingestellt werden müssen. Hierzu sind die Wurfschaufeln winkelverschwenkbar auf den Schleuderscheiben angeordnet. Dieses ist insbesondere im Hinblick darauf, daß die gleiche Düngersorte, wenn sie von einem anderen Hersteller hergestellt worden ist, ein unterschiedliches Streuverhalten aufweisen kann, und so unterschiedliche Streuergebnisse mit den hier gezeigten Schleuderscheiben bei einigen Düngersorten erzielt werden. Teilweise verschlechtert sich dann das Streubild. Mit den hier gezeigten Wurfschaufeln und Schleuderscheiben lassen sich bei Arbeitsbreiten von 18, 24 m und mehr nur trapezförmige Grundstreubilder erzielen. Aus DE-Manuskript "DLG-Teilprüfung von Schleuder- und Pendelstreuern", Januar 1987 ist es bekannt, mit Schleuderdüngerstreuern für verschiedene Düngersorten und verschiedene Arbeitsbreiten dreiechförmige oder trapezförmige Streubilder zu erzeugen.

Der Erfindung liegt die Aufgabe zugrunde, auf einfache Weise für einen eingangs geschilderten Düngerstreuer bei verschiedensten Düngersorten und Arbeitsbreiten optimale Streuergebnisse zu erhalten.

Diese Aufgabe wird erfindungsgemäß mit dem im Anspruch 1 angegebenen Verfahren und dem im Anspruch 2 angegebenen Systemgelöst. Infolge dieser Maßnahme ist es möglich, mit ein und demselben Düngerstreuer bei gleicher Arbeitsbreite je nach den gewünschten Erfordernissen und vorliegenden Einsatzverhältnissen den gleichen Dünger jeweils mit einer gleich guten Verteilung sowohl mit einem trapezförmigen Grundstreubild als auch einem etwa dreieckförmigen Grundstreubild auch bei mittleren und großen Arbeitsbreiten bei gleicher und/oder größter Wurfweite zu verteilen. Somit ist die Verteilung verschiedener Düngersorten bei verschiedenen Arbeitsbreiten variabler im Hinblick auf die Streubilderzeugung sowie im Hinblick auf die verschiedensten Einsatzverhältnisse anpassbar auszugestalten. Es können mit ein und derselben Einstellung, wenn der Dünger auf große Arbeitsbreiten 24 m und mehr mit einem dreieckförmigen Grundstreubild verteilt wird, die verschiedenen Düngerarten der gleichen Düngersorte in einer guten Verteilung, ohne die Einstellung ändern zu müssen, verteilt werden.

Zur Erzielung eines dreieckförmigen Streubildes bei großen Arbeitsbreiten von 24 m und mehr schleudert die kurze Wurfschaufel eine größere Menge Dünger als die längere Wurfschaufel ab. Dieses ist zur einfachen Erzielung eines dreieckförmigen Grundstreubildes von grundlegender Bedeutung. Hierbei schleudert die kürzere Wurfschaufel die größere Menge des Düngers, der erforderlich ist um ein dreieckförmiges Streubild zu erreichen, in den näheren Bereich, während die längere Wurfschaufel die kleinere Menge weiter wirft. Hierbei ist es wichtig, um ein dreieckiges Streubild auch bei großen Arbeitsbreiten von 24 m und mehr zu erreichen, daß die Schleuderscheiben mit einer relativ großen Drehzahl dreht, so daß eine relativ hohe Umfangsgeschwindigkeit von mindestens von 18 bis 37 m pro Sekunde erreicht wird, um bei dreieckförmigen Grundstreubildern die Düngerpartikel im äußeren Bereich, von der Mitte der Maschine aus gemessen, zumindest etwa 24 m weit geschleudert werden. Durch den vorbeschriebenen Winkel von zumindest 210° zwischen den Wurfschaufeln wird bewirkt, daß eine Umstellung von dreieckförmigem und trapezförmigem Streubild einfach ermöglicht wird.

Weiterhin ist erfindungsgemäß vorgesehen, daß die kürzere Wurfschaufel gegenüber der durch die Habe und der inneren Befestigungsstelle verlaufenden Radialen derart weit zurückschwenkbar ist, daß in der maximalen Zurückschwenkstellung die kürzere Wurfschaufel zu dem Radialstrahl einen Winkel von mindestens 60° bis 80° einschließt. Hierdurch wird erreicht, daß die kürzere Wurfschaufel den Dünger derart in den mittleren Bereich abschleudert, und daß in Verbindung mit den von der längenen Wurfschaufel abgeschleuderten Düngerpartikeln ein dreieckförmiges Grundstreubild auch bei großen Arbeitsbreiten von 24 m und mehr entsteht. Hierbei sind die kürzeren und längeren Wurfschaufeln derart zueinander angeordnet, daß die kürzere Wurfschaufel etwa 3/5 bis 3/4 der Menge des auszubringenden Düngers abschleudert und die längere Wurfschaufel nur 1/4 bis 2/5 der Menge des auszubringenden Düngers abschleudert.

In einer anderen Ausführgungsform ist erfindungsgemäß vorgesehen, daß zumindest eine die der Wurfschaufeln (vorzugsweise die längere) auf der der Nabe zugewandten Seite der Rückwand einen Ausschnitt oder der Nabe zugewandten Seite der Rückwand der Wurfschaufel einen Abstand zu der Nabe aufweist. Hierdurch wird ereicht, daß durch diesen Ausschnitt oder Freiraum Dünger zu der anderen Wurfschaufel durchtreten kann und dann von dieser Wurfschaufel zusätzlich mit verteilt wird. Auch hierdurch läßt sich ein dreieckförmiges Grundstreubild auf einfache Weise für größere Arbeitsbreiten von 24 m und mehr erzielen. Um sich unterschiedlichen Arbeitsbreiten und Düngersorten anpassen zu können, ist erfindungsgemäß vorgesehen, daß der Ausschnitt in der Rückwand oder der durch den Abstand gebildete Freiraum durch einen auf der Rückwand aufliegenden Wandteil ganz oder teilweise abdeckbar ist.

Eine weitere Möglichkeit einer Streubildveränderung bzw. Streubildeinstellung wird dadurch erreicht, daß auf den Schleuderscheiben zumindest ein winkelverschwenkbares Plattensegment angeordnet oder anzuordnen ist, und daß auf dem Plattensegment zumindest eine der Wurfschaufeln, vorzugsweise die kürzere angeordnet ist. Hierdurch ist es in einfacher Weise möglich, die Wurfschaufel über einen sehr großen Bereich einstellbar zu gestalten, wobei gleichzeitig auch die der jeweiligen Wurfschaufel zugeführten Menge Dünger durch Verschwenken der Wurfschaufel mit dem Plattensegment veränderbar ist. Somit ist es möglich, mit ein und demselben Düngerstreuer gleicher Arbeitsbreite je nach den gewünschten Erfordernissen und vorliegenden Einsatzverhältnissen, den gleichen Dünger jeweils mit einer gleich guten Verteilung sowohl mit einem trapezförmigen Grundstreubild als auch mit einem etwa dreieckförmigen Grundstreubild auch bei mittleren und großen Arbeitsbreiten bei gleicher und/oder größter Wurfweite zu verteilen. So ist die Verteilung verschiedener Düngersorten bei verschiedenen Arbeitsbreiten variabel im Hinblick auf die Streubilderzeugung sowie im Hinblick auf die verschiedensten Einsatzverhältnisse anpassbar auszugestalten. Um dann noch das Streubild weiter genau einstellen zu können, ist vorgesehen, daß die Wurfschaufel auf dem Plattensegment winkelverschwenkbar angeordnet ist.

Bei einer weiteren Lösung ist vorgesehen, daß die Schleuderscheibe neben dem normalen Lochbild für die Anordnung der Wurfschaufeln ein oder mehrere Lochbilder für eine weitere und andere Anordnung von Wurfschaufeln etc. aufweist. Hierdurch ist es bei einem Schleuderdüngerstreuer, bei dem die Schleuderscheiben nicht leicht auswechselbar befestigt sind, möglich, die erfindungsgemäßen Maßnahmen auch bei einem derartigen Schleuderdüngerstreuer anzuwenden, da auf ein und derselben Schleuderscheibe die Wurfschaufeln in unterschiedlichen Positionen winkelverschwenkbar angeordnet werden können.

Dieses Lochbild kann auch so ausgestaltet sein, daß ein Plattensegment auf den Schleuderscheiben zu befestigen ist, auf dem dann die Wurfschaufeln winkelverschwenkbar ist. Darüber hinaus ist es auch noch zusätzlich möglich, die Wurfschaufeln gegen Wurfschaufeln unterschiedlicher oder anderer Länge auszutauschen.

Desweiteren ist nach der Erfindung vorgesehen, um eine lange Lebensdauer des Schleuderdüngerstreuers zu erreichen, daß der untere Teil der Trichterspitze aus einem nichtrostendem Material, vorzugsweise nicht rostendem Stahlblech, hergestellt ist. Hierdurch wird erreicht, wenn das Rührorgan den Dünger bewegt und hierdurch die Farbe im Inneren der Trichterspitze abgescheuert wird, daß trotzdem der aus Stahlblech hergestellte Trichter bei schlechter Wartung nicht durchrostet, da der aus nichtrostendem Material hergestellt ist. In einfacher Weise läßt sich die aus nichtrostendem Material hergestellte Trichterspitze an dem Vorratsbehälter anschrauben oder anschweißen.

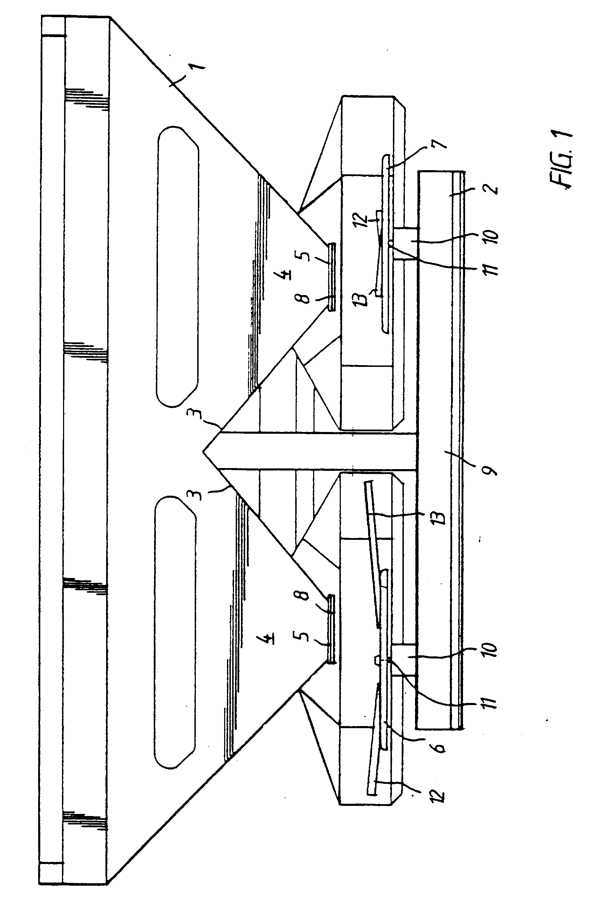

Weitere Einzelheiten der Erfindung sind den übrigen Unteransprüchen, der Beispielsbeschreibung und den Zeichnungen zu entnehmen. Hierbei zeigen
- Fig. 1: ein Schleuderstreuer in Prinzipdarstellung und in der Ansicht von hinten,
- Fig. 2: die auf in Fahrtrichtung gesehen linke Antriebswelle angeordnete Schleuderscheibe in der Draufsicht und in vergrößerter Darstellung zur Erzeugung von Streubildern für Arbeitsbreiten von 10 bis 18 m,
- Fig. 3: die auf in Fahrtrichtung gesehen linke Antriebswelle angeordnete Schleuderscheibe in der Draufsicht und in vergrößerter Darstellung zur Erzeugung von Streubildern für Arbeitsbreiten von 20 bis 28 m,
- Fig. 4: die auf in Fahrtrichtung gesehen linke Antriebswelle angeordnete Schleuderscheibe in der Draufsicht und in vergrößerter Darstellung zur Erzeugung von Streubildern für Arbeitsbreiten von 30 bis 36 m,
- Fig. 5: die auf in Fahrtrichtung gesehen linke Antriebswelle angeordnete Schleuderscheibe in der Draufsicht und in vergrößerter Darstellung zur Erzeugung von Streubildern für Arbeitsbreiten von 20 bis 28 m,
- Fig. 6: die auf in Fahrtrichtung gesehen linke Antriebswelle angeordnete Schleuderscheibe in der Draufsicht und in vergrößerter Darstellung zur Erzeugung von Streubildern für Arbeitsbreiten von 20 bis 28 m,
- Fig. 7: Darstellung eines Grundstreubildes in Prinzipdarstellung mit dreieckähnlicher Düngerverteilung für eine Arbeitsbreite von 12 m, wie es durch Schleuderscheiben gemäß Fig. 2 erzielbar ist.
- Fig. 8: Grundstreubild mit trapezförmiger Düngerverteilung bei einer Arbeitsbreite von 24 m, wie es durch Streuscheiben gemäß Fig. 3 erzielbar ist,
- Fig. 9: Grundstreubild für eine Arbeitsbreite von 36 m mit trapezförmiger Düngerverteilung wie es durch Schleuderscheiben gemäß Fig. 4 erzielbar ist,
- Fig. 10: ein Grundstreubild für eine Arbeitsbreite von 24 m mit dreieckföriger Düngerverteilung, wie sie durch die Schleuderscheiben gemäß den Fig. 5 und 6 erzielbar ist,
- Fig. 11: ein andersartig ausgebildeter Schleuderdüngerstreuer mit nicht auswechselbaren Schleuderscheiben, bei dem die Wurfschaufel aber auswechselbar auf den Schleuderscheiben befestigt sind,

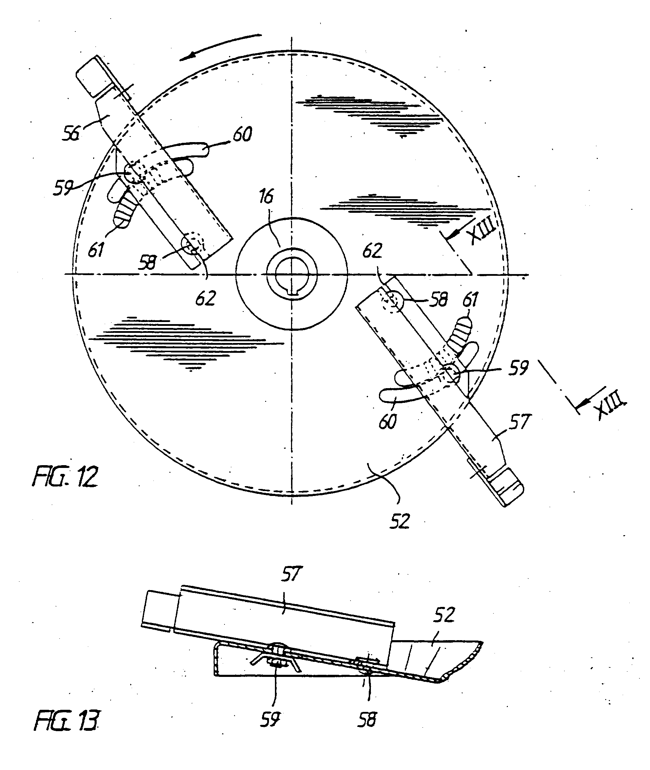

- Fig. 12: die Anordnung von auswechselbaren Wurfschaufeln auf einer Schleuderscheibe in der Draufsicht,

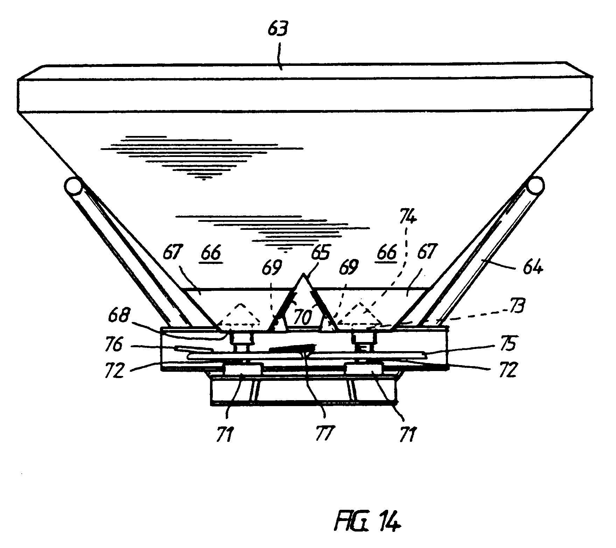

- Fig. 13: die Darstellung der Befestigung der Wurfschaufeln auf der Schleuderscheibe in Schnitt XIII - XIII,
- Fig. 14: einen erfindungsgemäßen Schleuderdüngerstreuer in der Ansicht von hinten in Prinzipdarstellung,

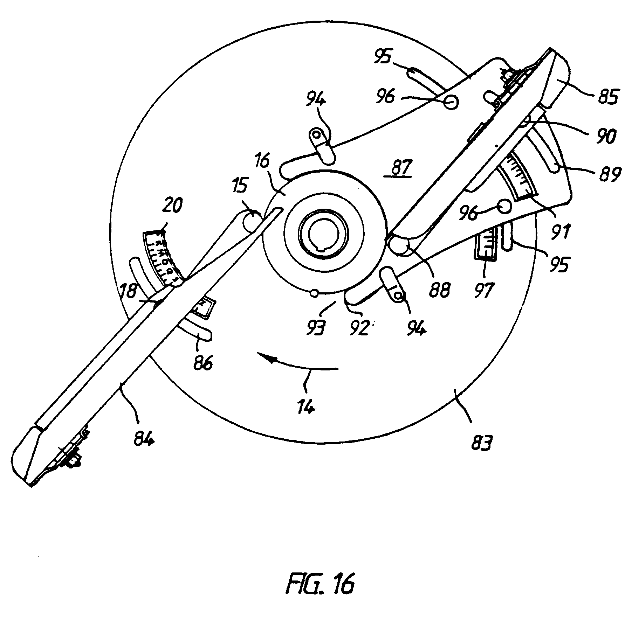

- Fig. 15: eine erfindungsgemäß ausgebildete Schleuderscheibe mit zusätzlichen Lochbildern in vergrößerter Darstellung, wobei nur die auf der in Fahrtrichtung gesehen linken Schleuderscheibenwelle angeordnete Schleuderscheibe dargestellt ist und
- Fig. 16: eine weitere und anders ausgebildete Schleuderscheibe, die auf der Schleuderscheibenwelle anzuordnen ist, wobei wiederum nur die in Fahrtrichtung gesehen auf der linken Schleuderscheibenwelle angeordnete Schleuderscheibe dargestellt ist.

Der Zentrifugaldüngerstreuer weist den Vorratsbehälter 1 und den Rahmen 2 auf, auf dessen Vorderseite in bekannter und daher nicht dargestellter Weise Dreipunktkupplungselemente zum Ankuppeln des Zentrifugaldüngerstreuers an den Dreipunktkraftheber eines Schleppers angeordnet sind. Der Vorratsbehälter 1 ist durch das trapezförmige Mittelteil 3 im unteren Bereich in die Trichterspitzen 4 aufgeteilt. Die Trichterspitzen 4 werden von unten durch die Bodenplatten 5 verschlossen. In den Bodenplatten befinden sich in bekannter und daher nicht dargestellter Weise die Auslauföffnungen, über welche das sich im Vorratsbehälter 1 befindliche Düngermaterial zu den Schleuderscheiben 6 und 7 gelangt. Unterhalb der Bodenplatten 5 befinden sich in bekannter und daher nicht näher dargestellter Weise die Schieber 8, über welche die Größe der Auslauföffnungen, die sich in der Bodenplatte 5 jeweils befinden, eingestellt werden kann. Die Auslauföffnungen, die sich in den Bodenplatten 5 befinden und die Schieber 8, bilden die Dosierorgane.

An dem unteren Querträger 9 des Rahmens 2 sind unterhalb der Bodenplatten 5 die Getriebe 10 angeordnet. Aus den Getrieben 10 ragen nach oben jeweils die Antriebswellen 11, auf deren oberen Ende die Schleuderscheiben 6 und 7 leicht lösbar und gegen andere Schleuderscheiben austauschbar angeordnet sind. Über die Getriebe 10 und die Wellen 11 werden die Schleuderscheiben 6 und 7 in entgegengesetzten Drehsinn zueinander rotierend angetrieben. Auf den Schleuderscheiben 6 sind die Wurfschaufeln 12 und 13 angeordnet. Mittels der Wurfschaufeln 12 und 13 wird der Dünger in Breitverteilung auf den Boden verteilt. Die Anordnung der Wurfschaufeln 12 und 13 auf den Schleuderscheiben 6 und 7 ist spiegelbildlich zueinander.

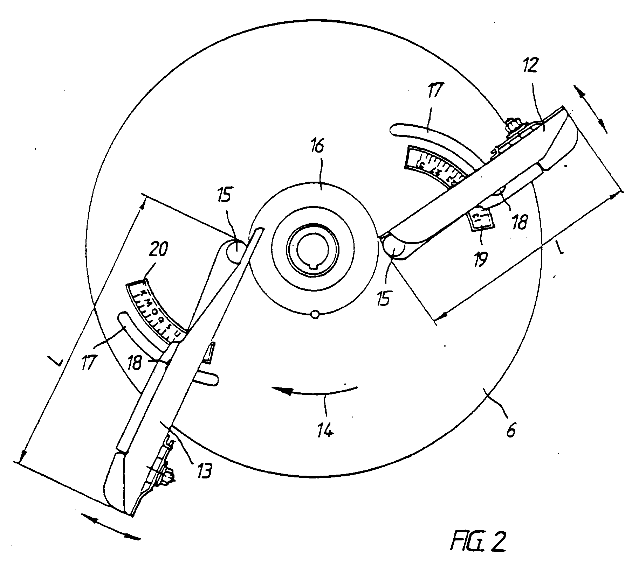

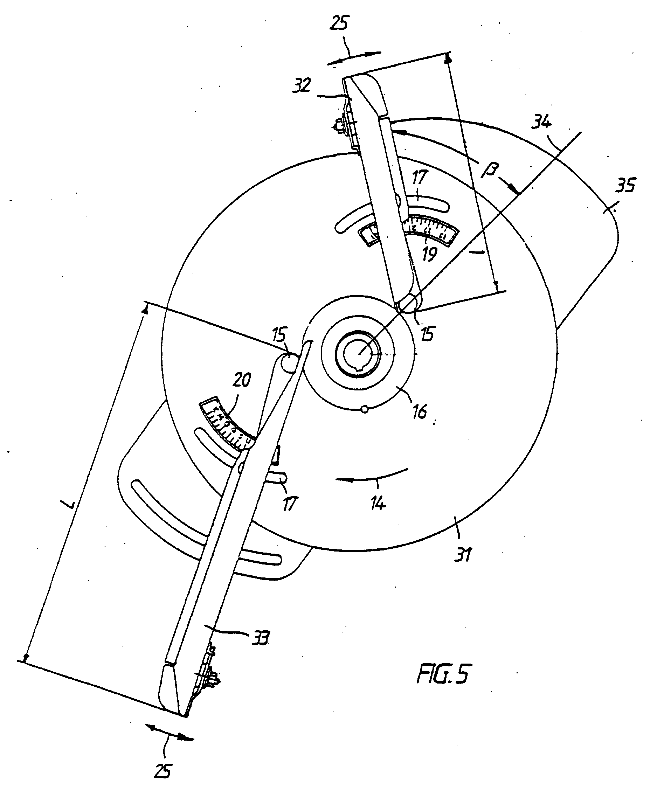

In den folgenden Figuren 2 bis 6 ist jeweils nur die Schleuderscheibe 6, die auf der in Fahrtrichtung gesehen linken Antriebswelle 11 angeordnet ist, dargestellt. Die Schleuderscheibe 7 mit den Wurfschaufeln ist also spiegelbildlich zu der Schleuderscheibe 6 mit den Wurfschaufeln ausgebildet.

Die Schleuderscheibe 6 wird in der durch den von dem Pfeil 14 gekennzeichneten Drehrichtung angetrieben. Auf der Schleuderscheibe 6 ist die kürzere Wurfschaufel 12 und die längere Wurfschaufel 13 angeordnet. Die Wurfschaufel 12 weist eine Länge I von ca. 210 mm auf. Die Wurfschaufel 13 weist eine Länge L von ca. 280 mm auf. Die Wurfschaufeln 15 und 13 sind jeweils mit einem Bolzen 15 im Bereich der Nabe 16 auf der Schleuderscheibe 6 in ihrem inneren Bereich befestigt. Des weiteren ist im Außenbereich der Schleuderscheibe 6 jeweils ein kreisförmiges Langloch 17 angeordnet. In dieses Langloch 17 faßt jeweils ein Schraubbolzen 18 der an der Wurtschaufel 12 und 13 jeweils befestigt ist. Auf der Unterseite der Schleuderscheibe 6 ist auf diesem Schraubbolzen 18, jeweils eine Flügelmutter angeordnet. Des weiteren sind auf der Schleuderscheibe 6 im Bereich der Wurtschaufel 12 und 13 jeweils die Skalen 19 und 20 angeordnet. Die Wurfschaufeln 12 und 13 sind winkelverschwenkbar auf der Schleuderscheibe 6 angeordnet und können anhand der Skalen 19 und 20 entsprechend der in einer Streutabelle angegebenen Einstellwerte für die jeweilige Düngersorte und Arbeitsbreite eingestellt werden, um für die jeweils gewünschte Arbeitsbreite eine gleichmäßige Düngerverteilung zu erhalten.

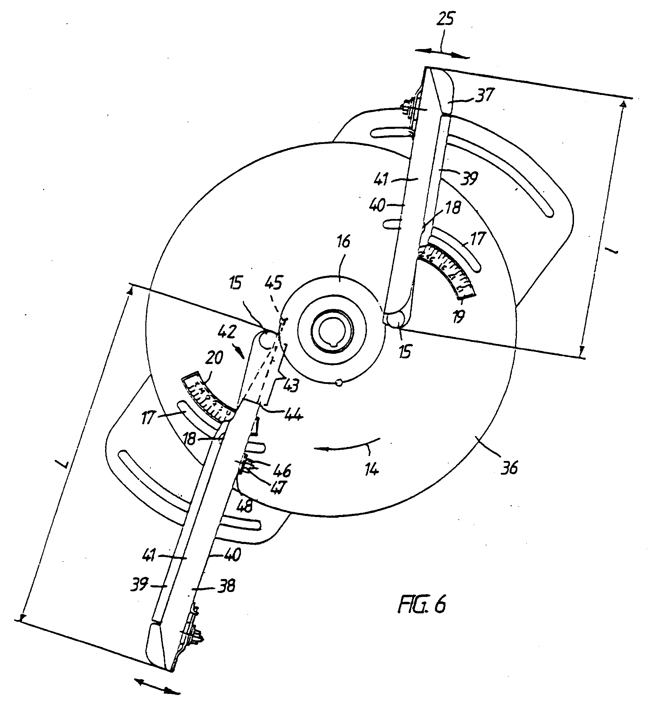

Die Schleuderscheibe 6 gemäß Fig. 2 sowie die spiegelbildlich ausgebildete Schleuderscheibe 7 ist zur Erzeugung des Grundstreubildes gemäß Fig. 7 vorgesehen. Dieses Grundstreubild 21 weist eine dreieckförmige Düngerverteilung auf. Die Düngerpartikel werden von den Wurfschaufeln 12 und 13 der beiden Schleuderscheiben 6 und 7 über eine Wurfweite W von 24 m abgeschleudert. Die Arbeitsbreite A beträgt hier 12 m. Durch entsprechende Überlappung der Streubilder 21, die in dem Abstand A nebeneinander liegen, wird eine gleichmäßige Düngerverteilung erreicht.

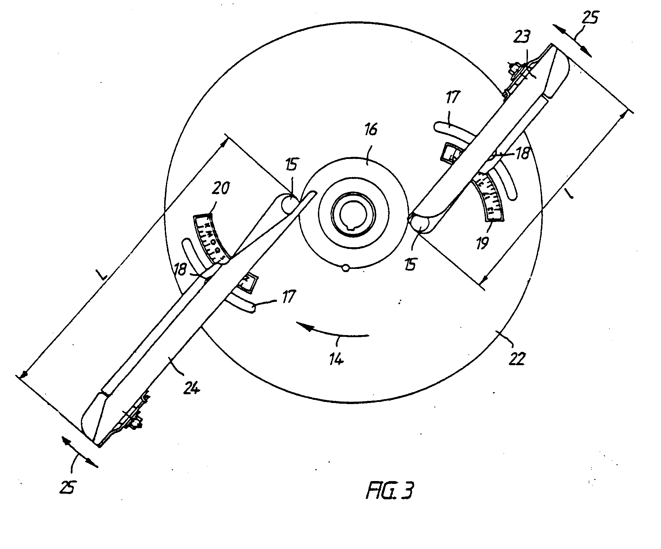

Soll mit dem Düngerstreuer das in Fig. 8 dargestellte Grundstreubild mit einer trapezfömigen Düngerverteilung erreicht werden, wobei eine Arbeitsbreite A von 24 m vorgegeben ist (bei einer maximalen Wurfweite W von 36 m), wird die in Fig. 3 dargestellte Schleuderscheibe 22 auf der linken Schleuderscheibewelle 11 angeordnet. Auf der rechten Schleuderscheibewelle 11 wird eine entsprechend, in der Fig. 3 dargestellte Schleuderscheibe 22 spiegelbildlicher Ausbildung eingesetzt. Auf der Schleuderscheibe 22 sind die kürzere Wurtschaufel 23 und die längere Wurfschaufel 24 angeordnet. Die kürzere Wurfschaufel weist die Länge I von ca. 260 mm auf. Die längere Wurfschaufel 24 besitzt eine Länge von etwa 360 mm. Auch die Wurfschaufeln 23 und 24 sind winkelverschwenkbar, wie durch den Doppelpfeil 25 jeweils angedeutet ist, angeordnet und anhand der Skalen 19 und 20 anhand von in der Streutabelle angegebenen Werten einstellbar. Mit der Schleuderscheibe 22 sowie mit der hierzu spiegelbildlich ausgebildeten Schleuderscheibe, die auf der rechten Schleuderscheibenwelle angeordnet ist, läßt sich das in Fig. 8 dagestellte Grundstreubild 22' mit trapezförmiger Verteilung für eine Arbeitsbreite A von 24 m und einer Wurfweite W von etwa 36 m erreichen. Durch eine entsprechende Überlappung der Streubilder 22' im Abstand A ergibt sich eine gleichmäßige Düngerverteilung auf dem gesamten Feld.

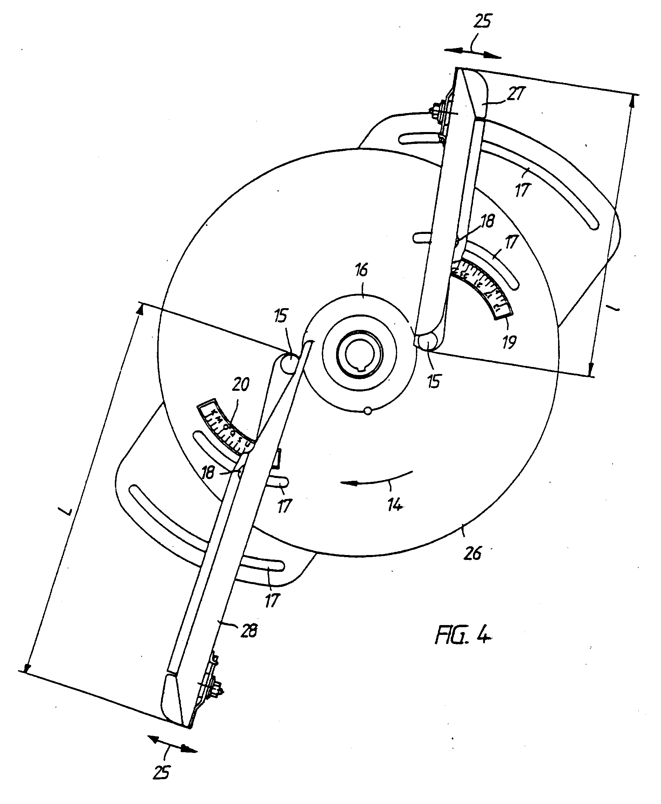

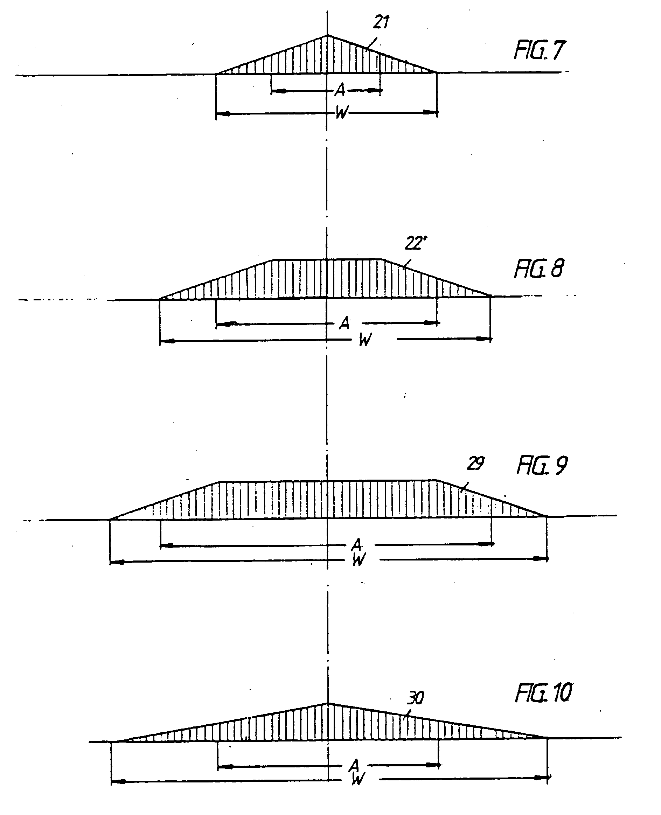

Mit der in Fig. 4 dargestellten Schleuderscheibe 26 mit der kürzeren Wurfschaufel 27 und der längeren Wurfschaufel 28 läßt sich das in Fig. 9 dargestellte Grundstreubild 29 mit trapezfömiger Düngerverteilung für eine Arbeitsbreite A von 36 m bei einer maximalen Wurfweite W von 48 m erreichen. Auch die Wurfschaufeln 27 und 28 sind winkelverschwenkbar auf der Schleuderscheibe 26 angeordnet und anhand der Skalen 19 und 20 entsprechend der in einer Streutabelle angegebenen Werte einstellbar.

Die in den Fig. 2 bis 4 dargestellten Schleuderscheiben sowie die in den Fig. 7 bis 9 dargestellen Streubilder lassen sich bereits mit Schleuderscheiben gemäß der europäischen Patentanmeldung EP 02 92 650 erzielen.

Wie bereits vor geschildert läßt sich mit der Schleuderscheibe 22 gemäß Fig. 3 eine Arbeitsbreite A von 24 m mit dem in Fig. 8 dagestellten Grundstreubild 22' mit trapezförmiger Verteilung des Düngers bei einer Wurfweite W von 36 m erreichen. Dieses trapezförmige Grundstreubild 22' für eine Arbeitsbreite A von 24 m hat im Hinblick auf die Windanfälligkeit große Vorteile. Auch ist die Wurfweite in Fahrtrichtung gesehen relativ klein sie beträgt etwa 18 m nach hinten.

Es hat sich nun jedoch herausgestellt, daß es auch wünschenswert wäre, bei eine Arbeitsbreite A von 24 m ein dreieckförmiges Grundstreubild 30, wie es in Fig. 10 dargestellt ist, zu erreichen. Ein derartiges Grundstreubild 30 für 24 m gemäß Fig. 10 muß eine Wurfweite W von etwa 48 m (quer zur Fahrtrichtung gemessen) aufweisen.

Ein derartiges Grundstreubild 30 gemäß Fig. 10 läßt sich durch eine erfindungsgemäße Schleuderscheibe 31 gemäß Fig. 5 erreichen. Die Schleuderscheibe 31, die auf der linken Schleuderscheibenwelle anzuordnen ist, weist die kürzere Wurfschaufel 32 und die längere Wurfschaufel 33 auf. Auf der rechten Schleuderscheibenwelle ist selbstverständlich wiederum eine spiegelbildliche Schleuderscheibe entsprechend spiegelbildlicher Anordnung der Wurfschaufeln 32 und 33 anzuordnen. Die kurze Wurfschaufel 32 weist eine Länge I von ca. 260 mm auf, während die längere Wurfschaufel 33 ein Länge L von ca. 410 mm aufweist.

Während die Wurfschaufeln bei den Schleuderscheiben gemäß den Fig. 2 bis 4 praktisch gegenüberliegend angeordnet sind, sind die Wurfschaufeln 32 und 33 der Schleuderscheibe 31 gemäß Fig. 5 so angeordnet, daß die kürzere Wurfschaufel 32 gegenüber der längeren Wurfschaufel 33 um einem Winkel von zumindest 210° bezogen auf die Drehrichtung 14 der Schleuderscheibe 31 nacheilend angeordnet ist. Um dieses zu erreichen ist die kürzere Wurfschaufel 32 in Bezug auf die längere Wurfschaufel 33 und bezogen auf die Drehrichtung 14 der Schleuderscheiben 31 gesehen, jeweils derart angeordnet, daß die Befestigungsstellen 15 der Wurfschaufeln 32 und 33 einen Winkel von zumindest 210° miteinander einschließen, so daß die kürzere Wurfschaufel 32 der längeren Wurfschaufel 33 entgegen der Drehrichtung um diesen Winkel zurückversetzt und nacheilend angeordnet ist. Darüber hinaus ist die kürzere Wurfschaufel 32 gegenüber dem durch die Nabe 16 und der inneren Befestigungsstelle 15 verlaufenden Radialstrahl 34 derart weit zurückschwenkbar, daß in der maximalen Rückschwenkstellung die kürzere Wurfschaufel 32 zum Radialstrahl 34 einen Winkel β von mindestens 60 bis 80° einschließt. Um einen ruhigen Lauf der Schleuderscheibe 31 jeweils zu erreichen, ist auf der der längeren Wurfschaufel 33 gegenüberliegenden Seite an der Schleuderscheibe 31 das Massenausgleichelement 35 angeordnet. Durch die vorbeschriebene Anordnung der kürzeren und längeren Wurfschaufeln zueinander sind die Wurfschaufeln 32 und 33 derart zueinander angeordnet, daß die kürzere Wurfschaufel etwa 3/5 bis 3/4 der Menge des auszubringenden Düngers abschleudert und die längere Wurfschaufel 33 nur etwa 1/4 bis 2/5 der Menge des von den Dosierorganen zudosierten Düngers abschleudert.

Durch die vorbeschriebene Anordnung der Wurfschaufeln 32 und 33 auf den Schleuderscheiben 31 wird das in Fig. 10 dargestellte Grundstreubild 30 mit der dreieckähnlichen Düngerverteilung erreicht. Die Arbeitsbreite beträgt hierbei A 24 m während die maximale Wurfweite 48 m beträgt. Die Düngerpartikel, die die maximale Wurfweite erreichen werden von der längeren Wurfschaufel 33 abgeschleudert, während die weiter in der Mitte abgeschleuderten Düngemittelpartikel von der kürzeren Wurfschaufel 32 abgeschleudert werden. Um dieses dreieckförmige Streubild zu erreichen, ist es erforderlich, daß die kürzere Wurfschaufel 32, wie vor beschrieben, eine größere Menge Düngermittel im Innenbereich als die längere Wurfschaufel im äußeren Wurfbereich abschleudert.

Somit ist also festzustellen, daß wahlweise bei einer Arbeitsbreite von 24 m sowohl das in Fig. 8 dargestellte Grundstreubild 22' mit einer trapezförmigen Düngerverteilung durch die Schleuderscheiben 22 gemäß Fig. 3 erreichbar ist, als auch ein Grundstreubild 30 gemäß Fig. 10 mit einer dreieckähnlichen Düngerverteilung durch die Schleuderscheiben 31 gemäß Fig. 5 zu erreichen ist. Somit ist also wahlweise vom Landwirt durch den entsprechenden Einsatz der Wurfschaufeln gemäß Fig. 3 oder gemäß Fig. 5 die gleiche Arbeitsbreite mit unterschiedlichen Grundstreubildern (trapezähnliche oder dreieckähnliche Düngerverteilung) erreichbar. Somit wird der Besitzer des Schleuderdüngerstreuers durch die Schleuderscheiben gemäß Fig. 3 und gemäß Fig. 5 in die Lage versetzt, sich die Streubilder auszusuchen und die entsprechenden Schleuderscheiben einzusetzen.

Der Grundgedanke besteht also darin, die hohe Drehzahl und die hohe Umfangsgeschwindigkeit auszunutzen, wobei die kurze Wurfschaufel eine größere Menge Dünger abschleudert als die lange Wurfschaufel.

Erstmalig wird es also bei einem Schleuderdüngerstreuer möglich, durch den entsprechenden Einsatz von Wurfschaufeln bei gleichem Drehzahlen und unterschiedlichem Wurfverhalten bei gleichen Korngrößenspektrum unterschiedliche Streubilder zu erreichen.

Das dreieckförmige Streubild gemäß Fig. 10 bietet den Vorteil, wie sich überraschend gezeigt hat, daß Dünger mit unterschiedlichen Korngrößenspektrum und unterschiedlichem Wurfverhalten mit ein und derselben Einstellung der Wurfschaufeln die gleichen Arbeitsbreiten bei noch zu akzeptierender und sich in festgelegten Toleranzgrenzen haltender Gleichmäßigkeit verteilt werden kann, ohne daß zu größe Über- oder Unterdüngungen entstehen. Das dreieckförmige Streubild gemäß Fig. 10 bei großen Arbeitsbreiten hat größere Überlappungstoleranzen als das trapezförmige Streubild 22' gemäß Fig. 8.

Somit ist festzustellen, daß durch die Schleuderscheiben gemäß Fig. 3 und Fig. 5 durch die entsprechende Anordnung der Wurfschaufeln auf den Schleuderscheiben es in einfacher Weise möglich ist, bei ein und derselben Arbeitsbreite verschiedene Streubilder, nämlich dreieck- oder trapezähnliche Streubilder, mit einer gleichmäßigen Verteilung des Düngers unterschiedlicher Düngersorten zu erreichen.

Das Streubild 30 gemäß Fig. 10 mit einer dreieckähnlichen Düngerverteilung und einer Arbeitsbreite von 24 m und einer maximalen Wurfweite von 48 m läßt sich ebenfalls mit der Schleuderscheibe 36 mit den Wurfschaufeln 37 und 38 erreichen. Auf der Schleuderscheibe 36 ist die kürzere Wurfschaufel 37 und die längere Wurfschaufel 38 winkelverschwenkbar um den Bolzen 15 angeordnet. Die Wurfschaufeln 37 und 38 weisen eine im Querschnitt U-förmige Form mit einer Unterwand 39, einer Rückwand 40 und einer Oberwand 41 auf. Die längere Wurfschaufel 38 weist auf ihrer der Nabe 16 zugewandten Seite 42 einen Ausschnitt 43 auf oder mit anderen Worten ausgedrückt, die der Nabe 16 zugewandte Seite der Rückwand 40 zugewandten Seite 44 der Rückwand 40 weist einen Abstand zu der Nabe 16 auf. Auf der Innenseite, d.h. also auf der in Drehrichtung 14 zugewandten Seite der Rückwand ist eine als Platte 45 ausgebildetes Wandteil angeordnet. Diese Platte 45 weist auf ihrer Rückseite den Schraubbolzen 46 mit der Mutter 47 auf. Dieser Schraubbolzen 46 faßt in ein sich in der Rückwand 40 der Wurfschaufel 38 befindliches Langloch 48, so daß die Platte 45 in Längsrichtung der Wurfschaufel 38 verstellbar ist. Hierdurch ist der Ausschnitt 42 in der Rückwand 40 oder der durch den Abstand gebildete Freiraum 43 durch den auf der Rückwand von innen aufliegenden Wandteil 45 ganz oder teilweise abdeckbar. Der Ausschnitt 42 oder der Freiraum 43 ist somit derart ausgebildet und angeordnet, daß durch den Ausschnitt 42 und 43 ein Teil des in den Dosierelementen auf den Schleuderscheiben aufgegebenen Düngers von der längeren Wurfschaufel 38 zu der kürzeren Wurfschaufel 37 durchgelassen wird. Somit sind die kürzere und längere Wurfschaufel derart zueinander angeordnet, daß die kürzere Wurfschaufel 37 etwa 3/5 bis 3/4 des auszubringenden Düngers abschleudert und die längere Wurfschaufel 38 nur etwa 1/4 bis 2/5 der Menge des auszubringenden Düngers abschleudert, um daß in Fig. 10 dargestellte Grundstreubild 30 mit der dreieckförmigen Düngerverteilung zu erreichen.

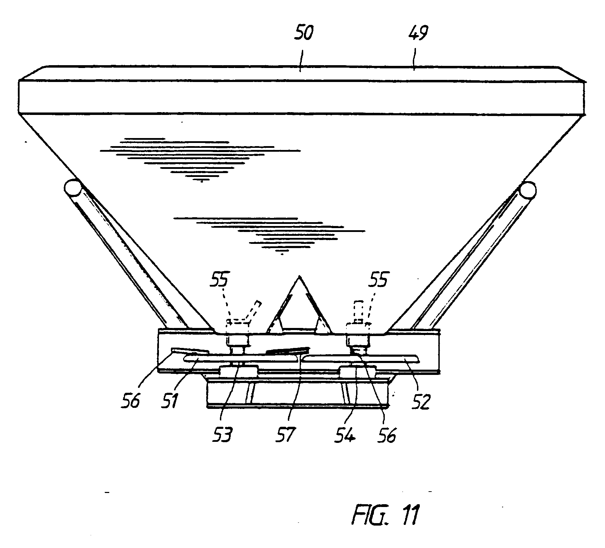

Die Fig. 11 zeigt den Schleuderdüngerstreuer 49 mit dem Vorratsbehälter 50 und den Schleuderscheiben 51 und 52. Die Schleuderscheiben 51 und 52 sind auf den Schleuderantriebswellen 53 und 54 angeordnet. Die Schleuderscheibenantriebswellen 53 und 54 ragen bis in das Innere des Vorratsbehälters 50 hinein und sind auf ihren Enden mit den Rührköpfen 55 bestückt. Auf den Schleuderscheiben 51 und 52 sind die winkelverschwenkbaren, austauschbaren Wurfschaufel 56 und 57 befestigt. Die Wurfschaufeln 56 und 57 lassen sich um den inneren Befestigungspunkt 58 verschwenken, wobei die Befestigungsschraube 59 mit dem Langloch 60 zusammenwirkt. Die Wurfschaufeln 56 und 57 lassen sich anhand von Streutabellen in unterschiedlichen Winkellagen mittels der Einstellskalen 61 einstellen.

Zum Erreichen der vorab geschilderten Vorteile zur Erzeugung unterschiedlicher Streubilder durch das Auswechseln der Schleuderscheiben lassen sich bei den Schleuderdüngerstreuer 48 die Wurfschaufeln 56 und 57 gegen anders artig ausgebildete Wurfschaufel austauschen. Hierzu weisen die Wurfschaufel 56 und 57 im Bereich des jeweiligen inneren Befestigungspunkten 58 das Langloch 62 auf, so daß sich die Wurfschaufel 56 und 57 nach lösen der Befestigungsschraube 59 einfach von der Schleuderscheibe abnehmen lassen.

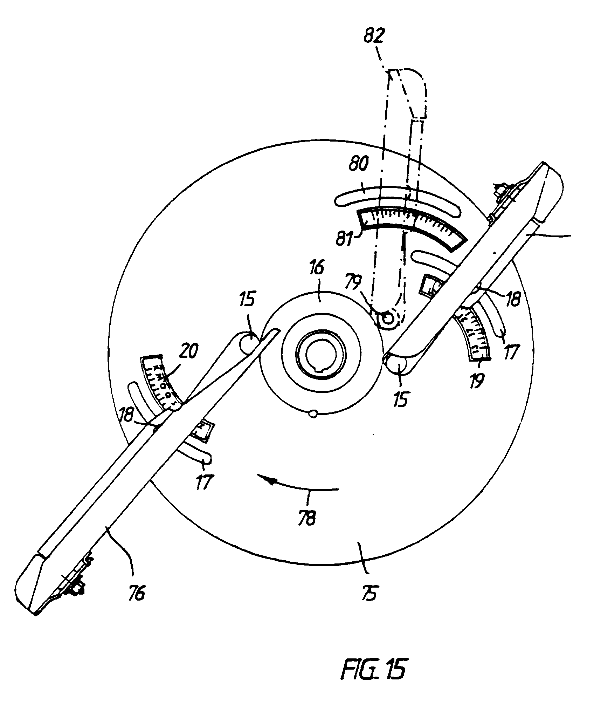

Der Zentrifugaldüngerstreuer gemäß Fig. 14 weist den Vorratsbehälter 63 und den Rahmen 64 auf, auf dessen Vorderseite in bekannter und daher nicht dargestellter Weise Dreipunktkupplungselemente zu Ankuppeln des Zentrifugaldüngerstreuers an den Dreipunktkraftheber des Ackerschleppers angeordnet sind. Der Vorratsbehälter 63 ist durch das dachförmige Mittelteil 65 im unteren Bereich in die beiden Trichterspitzen 66 aufgeteilt. Die unteren Teile 67, die durch die schraffierte Fläche dargestellt sind, sind aus einem nichtrostendem Material, vorzugsweise nichtrostendem Stahlblech hergestellt. Diese aus nichtrostendem Material hergestellten Trichterspitzen 67 sind an dem Vorratsbehälter angeschweißt. Es ist jedoch möglich diese an den Vorratsbehälter anzuschrauben.

Die Trichterspitzen 66 sind nach unten durch die Bodenplatten 67 verschlossen. In dem dachförmigen Mittelteil 65 sind die Auslauföffnungen 69 angeordnet, deren Öffnungsweite durch die vor den Auslauföffnungen 69 angeordneten Schieber 70 in bekannter und daher nicht näher dargestellter Weise einzustellen sind.

An dem Rahmen 64 sind die Getriebe 71 angeordnet. Nach oben ragen aus den Getrieben 71 die Antriebswellen 72 heraus, welche mit ihren oberen Enden 73 durch den Boden 68 bis in die Trichterspitzen 66 des Vorratsbehälters 63 hineinragen. Auf ihrem oberen Ende 73 tragen die Wellen 72 die Rührelemente 74.

Auf den Schleuderscheibenantriebswellen 72 sind die spiegelbildlich zueinander ausgebildeten Schleuderscheiben 75 mit den spiegelbildlich zueinander angeordneten Wurfschaufeln 76 und 77 befestigt. Die Schleuderscheiben 75 werden im entgegengesetzen Drehsinn zueinander angetrieben.

Mittels der Wurfschaufeln 76 und 77 wird der Dünger in Breitverteilung auf dem Boden verteilt. Die Anordnung der Wurfschaufeln 76 und 77 auf den Schleuderscheiben 75 ist spiegelbildlich zueinander. In der Fig. 2 ist nur die auf der in Fahrtrichtung gesehen linken Antriebswelle angeordneten Schleuderscheibe dargestellt. Die Schleuderscheibe, die auf der rechten Antriebswelle angeordnet ist, ist also spiegelbildlich zu der Schleuderscheibe gemäß Fig. 2 ausgebildet und die Anordnung der Wurfschaufeln 76 und 77 ist ebenfalls spiegelbildlich ausgebildet.

Die Schleuderscheibe 75 wird in der durch den Pfeil 78 gekennzeichneten Drehrichtung angetrieben. Auf der Schleuderscheibe 75 ist die kürzere Wurfschaufel 77 und die längere Wurfschaufel 76 angeordnet. Die Wurfschaufeln 76 und 77 sind jeweils mit einem Bolzen 15 im Bereich der Nabe 16 auf der Schleuderscheibe 75 in ihrem inneren Bereich befestigt. Desweiteren ist im Außenbereich der Schleuderscheibe 75 jeweils ein kreisförmiges Langloch 17 angeordnet. In dieses Langloch 17 faßt jeweils ein Schraubbolzen 18, der an der Wurfschaufel 76 und 77 befestigt ist. Auf der Unterseite der Schleuderscheibe 75 ist auf diesem Schraubbolzen 18 jeweils eine Flügelmutter angeordnet. Desweiteren sind auf der Schleuderscheibe 75 im Bereich der Wurfschaufeln 76 und 77 jeweils die Skalen 19 und 20 angeordnet. Die Wurfschaufeln 76 und 77 sind winkelverschwenkbar auf der Schleuderscheibe 75 angeordnet und können anhand der Skalen 19 und 20 entsprechend der in einer Streutabelle angegebenen Einstellwerte für die jeweilige Düngersorte und Arbeitsbreite eingestellt werden, um für die jeweils gewünschte Arbeitsbreite eine gleichmäßige Düngerverteilerung zu erhalten.

Auf der Schleuderscheibe 75 ist ein weiters Loch 79 im Bereich der Nabe 16 vorgesehen. Desweiteren ist im Abstand zu dem Loch 79 ein kreisbogenförmiges Loch 80 vorgesehen. Desweiteren ist im Bereich des Langloches 18 eine Skala 81 vorgesehen. Somit ist es möglich, die Wurfschaufeln 77 anstelle in der mit durchzogenen Linien dargestellten Porition in die in mit strichpunktierten Linien angedeuteten Position 82 zu befestigen.

Die innere Befestigungsstelle, die durch das Loch 76 für die weitere Befestigung oder Anordnung der Wurfschaufel 77 auf der Schleuderscheibe 75 vorgesehen ist, ist um einem Winkel von etwa 210° bezogen auf die Drehrichtung 78 der Schleuderscheibe 75 nacheilend gegenüber der Befestigungsstelle 15 angeordnet. Hierdurch wird erreicht, daß die kürzere Wurfschaufel etwa 3/5 bis 3/4 der Menge des auszubringenden Düngers abschleudert und die längere Wurfschaufel 76 nur etwa 1/4 bis 2/5 der Menge des von den Dosierorganen zudosierten Düngers abschleudert. Somit befinden sich also auf der Schleuderscheibe 75 neben dem normalen Lochbild für die Anordnung der Wurfschaufel ein weiteres Lochbild für eine weitere und andere Anordnung der Wurfschaufel.

Die Fig. 16 zeigt eine weitere auf einer Schleuderscheibenantriebswelle anzuordnende Schleuderscheibe 83. Auf dieser Schleuderscheibe 83 ist die längere Wurfschaufel 84 und die kürzere Wurfschaufel 85 angeordnet. Die Schleuderscheibe 83 ist für die Anordnung auf der in Fahrtrichtung gesehen linken Antriebswelle vorgesehen. Die auf der rechten Schleuderscheibenantriebswelle anzuordnende Schleuderscheibe ist zu der hier in Fig. 3 dargestellten Schleuderscheibe 83 und der Anordnung der Wurfschaufeln 84 und 85 spiegelbildlich ausgebildet. Die Schleuderscheibe 83 wird in der durch den Pfeil 14 dargestellten Drehrichtung angetrieben.

Die längere Wurfschaufel 84 ist mittels des Bolzens 15 im Bereich der Nabe 16 auf der Schleuderscheibe 83 in ihrem inneren Bereich befestigt. Desweiteren ist im Außenbereich der Schleuderscheibe 83 im Bereich der längeren Wurfschaufel 84 ein kreisbogenförmiges Langloch 85 vorgesehen. In dieses Langloch 85 faßt der Schraubbolzen 18, der an der Wurfschaufel 84 befestigt ist. Auf der Unterseite der Schleuderscheibe 83 ist auf diesen Schraubbolzen 18 jeweils eine Flügelmutter angeordnet. Desweiteren ist auf der Schleuderscheibe 63 im Bereich des kreisfbogenörmigen Langloches 86 im Einstellbereich der Wurfschaufel 84 die Skala 20 angeordnet. Die Wurfschaufel 84 ist winkelverschwenkbar auf der Schleuderscheibe 83 angeordnet und kann anhand der Skala 20 entsprechend der in einer Streutabelle angegebenen Einstellwerte für die jeweilige Düngersorte und Arbeitsbreite eingestellt werden, um für die jeweils gewünschte Arbeitsbreite eine gleichmäßige Düngerverteilung zu erhalten.

Desweiteren ist auf der Schleuderscheibe 83, wie bereits erwähnt, die kürzere Wurfschaufel 85 angeordnet. Die kürzere Wurfschaufel 85 ist auf dem Plattensegment 87 mittels des Bolzens 88 im Bereich der Nabe 16 befestigt. Desweiteren weist das Plattensegment 87 außerhalb der Schleuderscheibe 83 das kreisbogenförmige Langloch 89 auf.

In das Langloch 89 faßt der Schraubbolzen 90, der an der Wurfschaufel 85 befestigt ist. Auf der Unterseite des Plattensegmentes 87 ist auf diesen Schraubbolzen eine Flügelmutter angeordnet. Die Wurfschaufel 85 ist somit auf dem Plattensegment 87 winkelverschwenkbar angeordnet und anhand der auf dem Plattensegment 87 angeordneten und sich im Bereich der Wurfschaufeln 85 befindlichen Skala 91 anhand der in einer Streubtabelle angegebenen Einstellwerte für die jeweilige Düngersorte und Arbeitsbreite einstellbar, um für die jeweils gewünschte Arbeitsbreite die gewünschte Düngerverteilung zu erhalten.

Desweiteren ist das Plattensegment 87 winkelverschwenkbar auf der Schleuderscheibe 83 angeordnet. Hierzu weist das Plattensegment im Bereich der Nabe 16 ein Bohrung 92 auf. Diese Bohrunge 92 ist seitlich offen, so daß das Plattensegment 87 im Bereich der Nabe 16 eine sich etwa in radialer Richtung erstreckende Ausschnittsöffnung 93 besitzt, so daß das Plattensegment 87 von der Schleuderscheibe 83 abnehmbar ist. Das Plattensegment 87 ist im Bereich der Nabe 16 mittels der Befestigungselemente, die als Klammer 94 ausgebildet sind, winkelverschwenkbar befestigt. Desweiteren sind im Außenbereich der Schleuderscheibe 83 im Bereich des Plattensegmentes zwei kreisbogenförmge Langlöcher 95 angeordnet. Diese Langlöcher 95 fassen die an dem Plattensegment befestigten Schraubbolzen 96. Auf der Unterseite der Schleuderscheiben 83 sind auf den Schraubbolzen 96 Flügelmuttern angeordnet. Desweiteren ist im Bereich des einen Langloches 95 im Bereich des Plattensegmentes 87 eine Skala 97 angeordnet, anhand welcher die Stellung des Plattensegmentes 87 genau eingestellt werden kann. Hierdurch ist es möglich, das Plattensegment in unterschiedlichen Stellungen und somit die Wurfschaufel 85 ebenfalls in verschiedenen Stellungen auf den Schleuderscheiben 83 anzuordnen. Hierdurch wird erreicht, daß man in äußerst einfacher Weise die jeder Schleuderscheibe zugeführte Düngemittelmenge variieren kann, um so mit unterschiedliche Streubilder, wie in der Hauptpatentanmeldung beschrieben, zu erreichen.

## Patentansprüche

1. Verfahren zum Einsatz eines Zentrifugaldüngerstreuersystems mit einem Dosierorgane aufweisenden Vorratsbehälter, unter dem zwei Wurfschaufeln aufweisende und rotierend angetriebene Schleuderscheiben angeordnet sind, wobei zur Erzeugung einer gleichmäßigen Verteilung bei unterschiedlicher Arbeitsbreiten und Wurfweiten für verschiedene Düngersorten entsprechende Wurfschaufeln auf den Schleuderscheiben einsetzbar sind, **dadurch gekennzeichnet**, daß die Wurfschaufeln (12, 13, 23, 24, 27, 28, 32, 33, 37, 38, 56, 57) derart auf den Schleuderscheiben (6, 22, 26, 31, 36, 51, 52) anzuordnen sind, daß sich wahlweise bei ein und derselben Arbeitsbreite dreieck- oder trapezähnliche Streubilder für den gleichen Dünger erzeugen lassen.

2. Zentrifugaldüngerstreuersystem zur Durchführung des Verfahrens nach Anspruch 1, mit dem wahlweise durch Einsatz unterschiedlich angeordneter Wurfschaufeln entweder ein dreieckförmiges oder ein trapezähnliches Streubild erzielbar ist mit einem Dosierorgane aufweisenden Vorratsbehälter, unter dem zwei Wurfschaufeln aufweisende und rotierend angetriebene Schleuderscheiben angeordnet sind, wobei eine kürzere und eine längere Wurfschaufel auf jeder Schleuderscheibe angeordnet ist und wobei die Wurfschaufeln um die Befestigungsstelle (32, 33) mit unterschiedlichen Winkeln auf den Schleuderscheiben anordbar und/oder einstellbar angeordnet sind, **dadurch gekennzeichnet,** daß die Befestigungsstelle (15, 79, 88) der kürzeren Wurfschaufel (32) gegenüber der Befestigungsstelle (15) der längeren Wurfschaufel (33) zur Erzielung eines dreieckförmigen Streubildes um zumindest einen Winkel von 210°, bezogen auf die Drehrichtung (14) der Schleuderscheibe (31), nacheilend angeordnet ist, und die Wurfschaufeln mit anderen Winkeln derart auf den Schleuderscheiben anordbar sind, dass sich bei ein und derselben Arbeitsbreite auch ein trapezähnliches Streubild für den gleichen Dünger erzeugen lässt.

3. Zentrifugaldüngerstreuersystem nach Anspruch 2, dadurch gekennzeichnet, daß für verschiedene Arbeitsbreitenbereiche unterschiedliche Wurfschaufeln einsetzbar sind.

4. Zentrifugaldüngerstreuersystem nach einem oder mehreren der vorstehenden Ansprüche, dadurch gekennzeichnet, daß die kürzere Wurfschaufel (32) gegenüber dem durch die Nabe (16) und der inneren Befestigungsstelle (15) verlaufenden Radialstrahl (34) derart weit zurückschwenkbar ist, daß in der maximalen Zurückschwenkstellung die kürzere Wurfschaufel (32) zu dem Radialstrahl (34) einen Winkel (β) von mindestens 60° bis 80° einschließt.

5. Zentrifugaldüngerstreuersystem nach einem oder mehreren der vorstehenden Ansprüche, dadurch gekennzeichnet, daß die kürzere und längere Wurfschaufel (32, 33) derart zueinander angeordnet sind, daß die kürzere Wurfschaufel (32) etwa 3/5 bis 3/4 der Menge des auszubringenden Düngers abschleudert und die längere Wurfschaufel (33) nur etwa 1/4 bis 2/5 der Menge des auszubringenden Düngers abschleudert.

6. Zentrifugaldüngerstreuersystem nach einem oder mehreren der vorstehenden Ansprüche, wobei die Wurfschaufeln eine im Querschnitt U-förmige Form mit einer Unter-, Rück- und Oberwand aufweisen und die Wurfschaufeln mit ihrem der Nabe der Schleuderscheibe zugewandten Seite bis etwa an die Nabe der Scheibe heranreichen insbesondere nach Anspruch 1, dadurch gekennzeichnet, daß zumindest eine der Wurfschaufeln (37, 38) (vorzugsweise die längere) auf der der Nabe )16) zugewandten Seite in ihrer Rückwand (40) einen Ausschnitt oder die der Nabe zugewandten Seite der Rückwand (40) der Wurfschaufel (38) einen Abstand zu der Nabe aufweist.

7. Zentrifugaldüngerstreuersystem nach Anspruch 2, dadurch gekennzeichnet, daß der Ausschnitt in der Rückwand (40) oder der durch den Abstand gebildete Freiraum durch einen auf der Rückwand (40) aufliegenden Wandteil (45) ganz oder teilweise abdeckbar ist.

8. Zentrifugaldüngerstreuersystem nach einem oder mehreren der vorstehenden Ansprüche, dadurch gekennzeichnet, daß der Wandteil (45) auf der Innenseite der Rückwand (40) angeordnet ist.

9. Zentrifugaldüngerstreuersystem nach einem oder mehreren der vorstehenden Ansprüche, dadurch gekennzeichnet, daß auf der Schleuderscheibe (36) Wurfelemente (37, 38) unterschiedlicher wirksamer Länge angeordnet sind, daß bei der längeren Wurfschaufel (38) der Ausschnitt in der Rückwand (40) vorgesehen ist.

10. Zentrifugaldüngerstreuersystem nach einem oder mehreren der vorstehenden Ansprüche, dadurch gekennzeichnet, daß der Ausschnitt derart ausgebildet und angeordnet ist, daß durch den Ausschnitt ein Teil des von den Dosierelementen auf den Schleuderscheiben (36) aufgegebenen Düngers zu der anderen Wurfschaufel (37) durchgelassen wird.

11. Zentrifugaldüngerstreuersystem nach einem oder mehreren der vorstehenden Ansprüche, dadurch gekennzeichnet, daß auf jeder Scheuderscheibe drei Wurfschaufeln unterschiedlicher Länge angeordnet sind, wobei zumindest die längste Wurfschaufel auf ihrer der Nabe zugewandten Seite in ihrer Rückwand einen Ausschnitt aufweist.

12. Zentrifugaldüngerstreuersystem nach einem oder mehreren der vorstehenden Ansprüche, dadurch gekennzeichnet, daß die Wurfschaufeln (56, 57) gegen Wurfschaufeln anderer Länge austauschbar sind, daß auf der Schleuderscheibe (51, 57) ein innerer Bolzen (58) mit einem gegenüber dem Bolzen (58) einen größeren Durchmesser aufweisenden Kopf angeordnet ist, daß die Wurfschaufeln (56, 57) in ihrer Unterwand einen sich in Längsrichtung der Wurfschaufel (56, 57) erstreckenden und auf der der Nabe zugewandten Seite offenen Schlitz (62) aufweist, daß der Schlitz (62) der Wurfschaufel (56, 57) auf den Bolzen (58) aufschiebbar ist.

13. Zentrifugaldüngerstreuersystem nach einem oder mehreren der vorstehenden Ansprüche, dadurch gekennzeichnet, daß auf den Schleuderscheiben (83) zumindest ein winkelverschwenkbares Plattensegment (87) angeordnet oder anzuordnen ist, daß auf dem Plattensegment (87) zumindest eine der Wurfschaufeln (85), vorzugsweise die kürzere, angeordnet ist.

14. Zentrifugaldüngerstreuersystem nach einem oder mehreren der vorstehenden Ansprüche, dadurch gekennzeichnet, daß die Wurfschaufel (85) auf dem Plattensegment (87) winkelverschwenkbar angeordnet ist.

15. Zentrifugaldüngerstreuersystem nach einem oder mehreren der vorstehenden Ansprüche, dadurch gekennzeichnet, daß das Plattensegment (87) eine Bohrung (92) aufweist, die um die Nabe (16) der Schleuderscheibe (83) faßt, daß das Plattensegment (87) mittels Befestigungselementen (94,96) winkelverschwenkbar auf der Schleuderscheibe (83) angeordnet ist.

16. Zentrifugalstreuersystem nach Anspruch 15, dadurch gekennzeichnet, daß das Plattensegment im Bereich der Nabe (16) eine sich etwa in radialer Richtung erstreckende Ausschnittsöffnung (93) aufweist, so daß das Plattensegment von der Schleuderscheibe (83) abnehmbar ist.

17. Zentrifugaldüngerstreuersystem nach einem oder mehreren der vorstehenden Ansprüche, dadurch gekennzeichnet, daß die Schleuderscheibe (75) neben dem normalen Lochbild (15) für die Anordnung der Wurfschaufeln (76,77) ein oder mehrere Lochbilder (79) für eine weitere und andere Anordnung von Wurfschaufeln etc. aufweist.

18. Zentrifugaldüngerstreuersystem nach einem oder mehreren der vorstehenden Ansprüche, dadurch gekennzeichnet, daß dieses Lochbild derart ausgebildet ist, daß jeweils ein oder mehrere Plattensegmente auf den Schleuderscheiben zu befestigen sind.

## Claims

1. Method of using a centrifugal fertiliser broadcasting system comprising a hopper which includes metering members and beneath which are disposed centrifugal discs, which include two throwing vanes and are rotatably driven, appropriate throwing vanes on the centrifugal discs being usable in order to produce a uniform distribution with different working widths and throwing widths for various types of fertiliser, characterised in that the throwing vanes (12, 13, 23, 24, 27, 28, 32, 33, 37, 38, 56, 57) are to be so disposed on the centrifugal discs (6, 22, 26, 31, 36, 51, 52) that triangular-like or trapezoidal-like broadcasting patterns for the same fertiliser can be selectively produced with one and the same working width.

2. Centrifugal fertiliser broadcasting system for accomplishing the method according to claim 1, whereby either a triangular or a trapezoidal-like broadcasting pattern can be selectively achieved by using differently disposed throwing vanes, comprising a hopper which includes metering members and beneath which are disposed rotatably driven centrifugal discs, which include two throwing vanes, a shorter and a longer throwing vane being disposed on each centrifugal disc, and the throwing vanes (32, 33) being disposed so as to be disposable and/or adjustable around the mounting location on the centrifugal discs at different angles, characterised in that the mounting location (15, 79, 88) of the shorter throwing vane (32) is disposed so as to lag behind the mounting location (15) of the longer throwing vane (33) to achieve a triangular broadcasting pattern by an angle of at least 210° relative to the direction of rotation (14) of the centrifugal disc (31), and the throwing vanes are disposable on the centrifugal discs at different angles so that a trapezoidal-like broadcasting pattern for the same fertiliser can also be produced with one and the same working width.

3. Centrifugal fertiliser broadcasting system according to claim 2, characterised in that different throwing vanes are usable for various working width ranges.

4. Centrifugal fertiliser broadcasting system according to one or more of the preceding claims, characterised in that, compared with the radius (34) which extends through the hub (16) and the internal mounting location (15), the shorter throwing vane (32) can be swung-back to such an extent that, in the maximum swung-back position, the shorter throwing vane (32) forms an angle (β) of at least 60° to 80° relative to the radius (34).

5. Centrifugal fertiliser broadcasting system according to one or more of the preceding claims, characterised in that the shorter and longer throwing vanes (32, 33) are so disposed relative to each other that the shorter throwing vane (32) centrifuges approximately 3/5 to 3/4 of the quantity of the fertiliser to be distributed, and the longer throwing vane (33) only centrifuges approximately 1/4 to 2/5 of the quantity of the fertiliser to be distributed.

6. Centrifugal fertiliser broadcasting system according to one or more of the preceding claims, the throwing vanes having a U-shaped cross-section with a lower, rear and upper wall, and the throwing vanes extending approximately to the hub of the disc with their side facing the hub of the centrifugal disc, more especially according to claim 1, characterised in that at least one of the throwing vanes (37, 38) (preferably the longer one) has a cutaway portion in its rear wall (40) on the side facing the hub (16), or the side of the rear wall (40) of the throwing vane (38) facing the hub is spaced from the hub.

7. Centrifugal fertiliser broadcasting system according to claim 2, characterised in that the cutaway portion in the rear wall (40), or the space formed by the spacing, is wholly or partially coverable by a wall portion (45) situated on the rear wall (40).

8. Centrifugal fertiliser broadcasting system according to one or more of the preceding claims, characterised in that the wall portion (45) is disposed on the inside surface of the rear wall (40).

9. Centrifugal fertiliser broadcasting system according to one or more of the preceding claims, characterised in that throwing elements (37, 38) of different effective lengths are disposed on the centrifugal disc (36), and in that, in the case of the longer throwing vane (38), the cutaway portion is provided in the rear wall (40).

10. Centrifugal fertiliser broadcasting system according to one or more of the preceding claims, characterised in that the cutaway portion is so configured and disposed that a portion of the fertiliser, fed by the metering members to the centrifugal discs (36), is transferred to the other throwing vane (37) through the cutaway portion.

11. Centrifugal fertiliser broadcasting system according to one or more of the preceding claims, characterised in that three throwing vanes of different lengths are disposed on each centrifugal disc, at least the longest throwing vane having a cutaway portion in its rear wall on its side facing the hub.

12. Centrifugal fertiliser broadcasting system according to one or more of the preceding claims, characterised in that the throwing vanes (56, 57) are interchangeable with throwing vanes of a different length, in that an internal bolt (58), having a head with a greater diameter than that of the bolt (58), is disposed on the centrifugal disc (51, 52), in that the throwing vane (56, 57) has, in its lower wall, a slot (62), which extends in the longitudinal direction of the throwing vane (56, 57) and is open on the side facing the hub, and in that the slot (62) in the throwing vane (56, 57) can be slipped over the bolt (58).

13. Centrifugal fertiliser broadcasting system according to one or more of the preceding claims, characterised in that at least one angularly pivotable plate segment (87) is disposed, or is to be disposed, on the centrifugal discs (83), and in that at least one of the throwing vanes (85), preferably the shorter one, is disposed on the plate segment (87).

14. Centrifugal fertiliser broadcasting system according to one or more of the preceding claims, characterised in that the throwing vane (85) is disposed on the plate segment (87) in an angularly pivotable manner.

15. Centrifugal fertiliser broadcasting system according to one or more of the preceding claims, characterised in that the plate segment (87) has a bore (92), which surrounds the hub (16) of the centrifugal disc (83), and in that the plate segment (87) is disposed on the centrifugal disc (83) in an angularly pivotable manner by means of mounting members (94, 96).

16. Centrifugal fertiliser broadcasting system according to claim 15, characterised in that the plate segment has, in the region of the hub (16), a cutout aperture (93), which extends approximately in a radial direction, so that the plate segment is removable from the centrifugal disc (83).

17. Centrifugal fertiliser broadcasting system according to one or more of the preceding claims, characterised in that the centrifugal disc (75) has, in addition to the normal pattern of holes (15) for the provision of the throwing vanes (76, 77), one or more patterns of holes (79) for an additional and different disposition of throwing vanes, etc.

18. Centrifugal fertiliser broadcasting system according to one or more of the preceding claims, characterised in that this pattern of holes is so configured that one or more plate segments are to be mounted on each of the centrifugal discs.

## Revendications

1. Procédé de mise en oeuvre d'un système à épandeur d'engrais comprenant un réservoir d'alimentation muni d'organes de dosage, et sous lequel tournent au moins deux disques d'épandage comportant des palettes d'éjection, et pour créer une répartition régulière sur des largeurs de travail et des distances de projection différentes avec différents types d'engrais, les disques d'épandage reçoivent des palettes d'éjection correspondantes,
procédé caractérisé en ce que
les palettes d'éjection (12, 13, 23, 24, 27, 28, 32, 33, 37, 38, 56, 57) sont montées sur les disques d'épandage (6, 22, 26, 31, 36, 51, 52) pour obtenir des images d'épandage différentes de préférence des images d'épandage triangulaires ou trapézoïdales, chaque fois pour une seule et même largeur de travail avec le même engrais.

2. Système à épandeur centrifuge d'engrais pour la mise en oeuvre du procédé selon la revendication 1 ayant une image d'épandage triangulaire ou trapézoïdales avec des palettes d'éjection montées différemment comprenant un réservoir d'alimentation comportant des organes de dosage, et sous lequel tournent au moins deux disques d'épandage comportant des palettes d'éjection chaque disque ayant une palette courte et une palette longue et les palettes d'éjection (32, 33) étant montées et/ou réglées sur les points de fixation avec des angles différents sur les disques d'épandage,
épandeur caractérisé en ce que
les points de fixation (15), (75), (88) la palette courte (32) est montée avec un angle de retard d'au moins 210° par rapport au point de fixation (15) de la palette longue (33), pour réaliser une image d'épandage triangulaire, cet angle étant rapporté au sens de rotation (14) du disque d'épandage (31) et les palettes d'éjection peuvent être montées avec d'autres angles sur les disques d'épandage pour obtenir également une image trapézoïdale avec le même engrais et pour la même largeur de travail.

3. Système à épandeur centrifuge selon la revendi cation 2,
caractérisé en ce qu'
il comporte différentes palettes d'éjection pour des plages de largeur de travail différentes.

4. Système à épandeur centrifuge d'engrais selon une ou plusieurs des revendications précédentes,
caractérisé en ce que
la palette courte (32) est pivotée en arrière par rapport au rayon (34) passant par le moyeu (16) et le point de fixation interne (15) de façon à être en position de basculement arrière maximum, la palette courte (32) fasse par rapport au rayon (34) un angle β d'au moins 60° à 80°.

5. Système à épandeur centrifuge d'engrais selon une ou plusieurs des revendications précédentes,
caractérisé en ce que
la palette courte et la palette longue (32, 33) sont disposées l'une par rapport à l'autre pour que la palette courte (32) éjecte entre 3/5 et 3/4 de la quantité d'engrais à distribuer et la palette longue (33) n'éjecte que 1/4 jusqu'à 2/5 de la quantité d'engrais à distribuer.

6. Système à épandeur centrifuge d'engrais selon une ou plusieurs des revendications précédentes, dont les palettes d'éjection ont une section en forme de U avec une paroi inférieure, une paroi arrière et une paroi supérieure, les palettes d'éjection arrivant avec le côté tourné vers le moyeu du disque d'épandage, jusqu'à environ au niveau du moyeu du disque, notamment selon la revendication 1,
caractérisé en ce qu'
au moins l'une des palettes (37, 38) (de préférence la palette longue) présente du côté tourné vers le moyeu (16), une découpe dans sa paroi arrière (40) ou encore le côté de la paroi arrière (40) tourné vers le moyeu pour la palette d'éjection (38) est écarté du moyeu.

7. Système à épandeur centrifuge d'engrais selon la revendication 2,
caractérisé en ce que
la découpe dans la paroi arrière 40 ou le dégagement formé par l'écartement, est recouvert totalement ou partiellement par une partie de paroi (45) appliquée sur la paroi arrière (40).

8. Système à épandeur centrifuge d'engrais selon une ou plusieurs des revendications précédentes,
caractérisé en ce que
la partie de paroi (45) est prévue sur le côté intérieur de la paroi arrière (40).

9. Système à épandeur centrifuge d'engrais selon une ou plusieurs des revendications précédentes,
caractérisé en ce que
le disque d'épandage (36) comporte des éléments éjecteurs (37, 38) de longueur efficace différente et en ce que la palette d'éjection longue (38) comporte la découpe dans la paroi arrière (40).

10. Système à épandeur centrifuge d'engrais selon une ou plusieurs des revendications précédentes,
caractérisé en ce que
la découpe est réalisée et montée de manière qu'une partie de l'engrais fournie par les éléments de dosage au disque d'épandage (36) traverse cette découpe pour arriver sur l'autre palette d'éjection (37).

11. Système à épandeur centrifuge d'engrais selon une ou plusieurs des revendications précédentes,
caractérisé en ce que
chaque disque d'épandage comporte trois palettes d'éjection de longueur différente et au moins la palette la plus longue présente une découpe dans sa paroi arrière, en son côté tourné vers le moyeu.

12. Système à épandeur centrifuge d'engrais selon une ou plusieurs des revendications précédentes,
caractérisé en ce que
les palettes d'éjection (56, 57) peuvent être remplacées par des palettes d'éjection de longueur différente, le disque d'épandage (51, 57) comportant un goujon (58) avec une tête de diamètre plus grand que le goujon (58) et les palettes d'éjection (56, 57) s'étendent par leur paroi inférieure, dans la direction longitudinale des palettes (56, 57) et comportent du côté tourné vers le moyeu une fente ouverte (62) et cette fente des palettes d'éjection (56, 57) peut se glisser sur le goujon (58).

13. Système à épandeur centrifuge d'engrais selon une ou plusieurs des revendications précédentes,
caractérisé en ce qu'
un disque d'épandage (83) comporte au moins un segment de plaque (87) pivotant et en ce que ce segment de plaque (87) est muni d'au moins l'une des palettes d'éjection (85) et de préférence la plus courte.

14. Système à épandeur centrifuge d'engrais selon une ou plusieurs des revendications précédentes,
caractérisé en ce que
la palette d'éjection (85) est montée pivotante sur le segment de plaque (87).

15. Système à épandeur centrifuge d'engrais selon une ou plusieurs des revendications précédentes,
caractérisé en ce que
le segment de plaque (87) comporte un perçage (92) venant prendre autour du moyeu (16) du disque d'épandage (83) et le segment de plaque (87) est pivotant sur le disque d'épandage (83) à l'aide des éléments de fixation (94, 96).

16. Système à épandeur centrifuge d'engrais selon la revendication 19,
caractérisé en ce que
le segment de plaque présente au niveau du moyeu (16), une découpe (93) s'étendant sensiblement dans la direction radiale, pour que le segment de plaque puisse s'enlever du disque d'épandage (83).

17. Système à épandeur centrifuge d'engrais selon une ou plusieurs des revendications précédentes,
caractérisé en ce que
le disque d'épandage (75) comporte à côté du perçage normal (15) pour le montage des palettes d'éjection (76, 77), un ou plusieurs perçages (79) pour un autre montage ou un montage supplémentaire de palettes d'éjection, etc.

18. Système à épandeur centrifuge d'engrais selon une ou plusieurs des revendications précédentes,
caractérisé en ce que
ce perçage est tel que chaque fois un ou plusieurs segments de plaque puissent se fixer sur les disques d'épandage.
